(19) Europäisches Patentamt

European Patent Office

Office européen des brevets

(11) **EP 1 715 243 A1**

(12) **EUROPEAN PATENT APPLICATION**

(43) Date of publication:
**25.10.2006 Bulletin 2006/43**

(51) Int Cl.:
*F21S 8/10* (2006.01)  *B60J 3/06* (2006.01)
*B60R 21/00* (2006.01)

(21) Application number: **06007032.3**

(22) Date of filing: **03.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **18.04.2005 IT PC20050023**

(71) Applicant: **Numerouno Ricerche S.r.L.**
**37137 Verona VR (IT)**

(72) Inventor: **Soramaé, Valentino**
**45031 Arquà Polesine (RO) (IT)**

(74) Representative: **Fisauli, Beatrice A. M.**
**Con Lor SPA**
**Via Renato Fucini, 5**
**20133 Milano (IT)**

(54) **Method and device for improving vision in low-visibility conditions caused by particles in suspension**

(57) A method and device is described, for improving the visibility by an observer (5) of an object (6) immersed in a medium containing particles P in suspension, said object being illuminated mainly by a light source (1), wherein a first beam of light (3), produced by said source (1) and projected towards said object to be observed (6), is passed through a first polarising filter (2) in such a way that a first beam of light (3a), reflected by said particles in suspension P, reaches said observer (5) after passing through a second polarised filter (4), and remaining substantially blocked, said second filter (4) being polarised in a direction orthogonal to the direction of polarisation of said first polarised filter (2), consequently allowing a second beam of light (3c), reflected by the object to be observed (6), to reach said observer (5) substantially without the interference caused by said first reflected beam (3a).

Fig. 1

## Description

This invention relates to a lighting method and a device for the implementation of said method, designed to improve vision in low-visibility conditions such as thick fog.

The visual disturbance caused by the presence of particles, such as drops of water, dust or smoke, in suspension in a liquid or gaseous medium is well known. The phenomenon described is particularly serious in the case of fog, due to the well-known risk it poses to traffic.

In the field of motor vehicles, night vision has certainly reached levels of excellence with the refinement and improvement of headlamps, but visibility remains highly problematic in the case of fog, because the light from the headlamps is diffused in such a way that visibility is seriously prejudiced.

The usual approach is to tackle the problem with complex systems, such as radar and lasers, which are only designed to provide the driver with information about any obstacles present along the route. In other words, said systems do not improve the perception of the shape and size of obstacles, or their perception in advance, as a result of greater depth of vision.

The main reasons why the visual capacity deteriorates at an artificially lit scene, such as a road at night lit by vehicle headlamps, is the presence in the visual medium, in this case air, of suspended particles which interfere with the propagation of rays of light.

Said particles can be of various kinds and sizes; for example, they are solid in the case of smoke, and liquid in the case of fog. Depending on their said nature and size, these particles may act differently from the incident ray of light, and in any event in such a way as to worsen the vision.

As is known from optical physics, light can undergo changes on its route through a medium. The factor of interest in this case is what happens to a ray of light which encounters a very small object immersed in a fluid medium. We refer in particular to rays in the visible light spectrum from 700 to 400 nm (1 nm = $10^{-6}$ mm) which encounter particles of dimensions comparable to the wavelength (X) of said radiation, said particles being suspended in the atmospheric medium.

Light can be absorbed, reflected, refracted or diffracted. In objects larger than those considered, each of said effects remains distinct, whereas in the case of said objects of microscopic dimensions, the last three effects tend to be confused. Hence the phenomenon of diffusion of light which takes place when a ray of light crosses a bank of fog, which consists of microscopic water droplets dispersed in the air.

When the particles are very small, as far as molecular size, the diffusion of light is an inverse function of the wavelength, namely:

$$D = 1 / \lambda^4$$

This is the reason for "selective" diffusion, which means that rays with a shorter wavelength, namely those of a bluish colour, are more diffused by nanoparticles. That is why the sky appears blue.

With particles having a diameter of 5 $\mu$m, ie. greater than the wavelength of visible light, diffusion ceases to depend on the wavelength of the light, and the light is consequently diffused in a similar way for all wavelengths. The result is multiple diffusion, which explains why the light diffused in a cloud or bank of fog is white, because the water droplets have a diameter of approximately 10 $\mu$m.

The diffusion of light due to fog causes a reduction in the contrast between the object and the fog, and this is the first cause of the reduction in visibility. Moreover, the nature of multiple diffusion demonstrates that no colour of light rays penetrates fog better than another.

As regards the direction of diffusion, it should be noted that as the particle size grows, there is a general tendency towards preferential diffusion in the direction of the incident ray. This phenomenon is also perceived with rain, but in the case of fog, due to the size of the droplets, diffusion towards the incident ray of light, and consequently towards the observer in the case of a motorist, is much greater.

Poor visibility in fog is mainly due to the reduction in contrast, which means that objects will be less distinct and blend into the background. The reduction in contrast is obviously accentuated by the dazzle effect, which causes the eye to adapt to the reflected light.

It is known from optical physics that when light is diffused, it is polarised in a linear manner. This means that an unpolarised beam of light which is diffused by particles in suspension is polarised in a linear way perpendicularly to the diffusion plane.

The main purpose of this invention is to provide a method and a device for the implementation of said method, in accordance with claims 1 and 2, which achieves the purpose of increasing the contrast between the view of objects and the background, drastically reducing the effects of reflection of the light towards the observer by blocking suspended particles in the visual medium. Said method requires the objects to be lit mainly by an artificial light source, as in the case of streets at night, or with negligible solar illumination, in the presence of fog.

Although they could also be used under other circumstances, such as civil lighting (street lighting, etc.), civil defence (operation by firefighters in smoky conditions) and medical procedures (elimination of reflections of body fluids during surgery), the main applications of the method and device according to the invention are in the field of night lighting in the presence of fog, and consequently mainly in the automobile industry, together with the railway, shipping and aeronautical industries.

The method according to the invention involves illuminating the objects to be viewed with a beam of polarised light with the use of a first polarised filter, and observing said objects through a second polarised filter, the directions of polarisation of said first and second filters being orthogonal to one another. In this way, as will emerge more clearly from the description below, the ray or beam of light reflected by the particles in suspension is substantially blocked by said second filter, and the resulting visual interference is thus considerably attenuated. The beam of light reflected by the object to be illuminated thus becomes more visible, and the contrast between the image of said object and the background consequently increases, with obvious benefits for the observer's vision.

The device that implements said method substantially comprises a source of light filtered with a first polarised filter, which emits a beam of light directed towards the object to be illuminated, and a second polarised filter positioned, in front of the observer, on the trajectory of the beam of light reflected by the particles in suspension, the directions of polarisation of said first and second filters being orthogonal to one another.

In the case of the automobile industry, said polarised source comprises one or more headlamps fitted with a polarised filter and a second polarised filter positioned in front of the driver, the directions of polarisation of said first and second filters being orthogonal to one another, and said filters preferably being integral with the vehicle so as to maintain the correct orthogonality.

Said device is obviously also effective in case of rain, giving the driver greater visibility and reducing dazzle from light reflected from the ground and the halo effect.

The invention will now be described in detail, by reference to the annexed figures, wherein:

- figure 1 illustrates the method according to the invention;
- figures 2 (a, b) schematically compare the visibility of an object in the case of use and non-use of a device according to the invention;
- figure 3 shows a vehicle to which the device according to the invention is fitted;
- figures 4 (a, b) schematically compare the vision of an object in the case of use and non-use of a device according to the invention, said device being fitted to a motor vehicle;
- figures 5 (a, b) are two photographic images obtained under the same atmospheric conditions, said images having been obtained without and with the use of the device according to the invention respectively, and with backlighting.

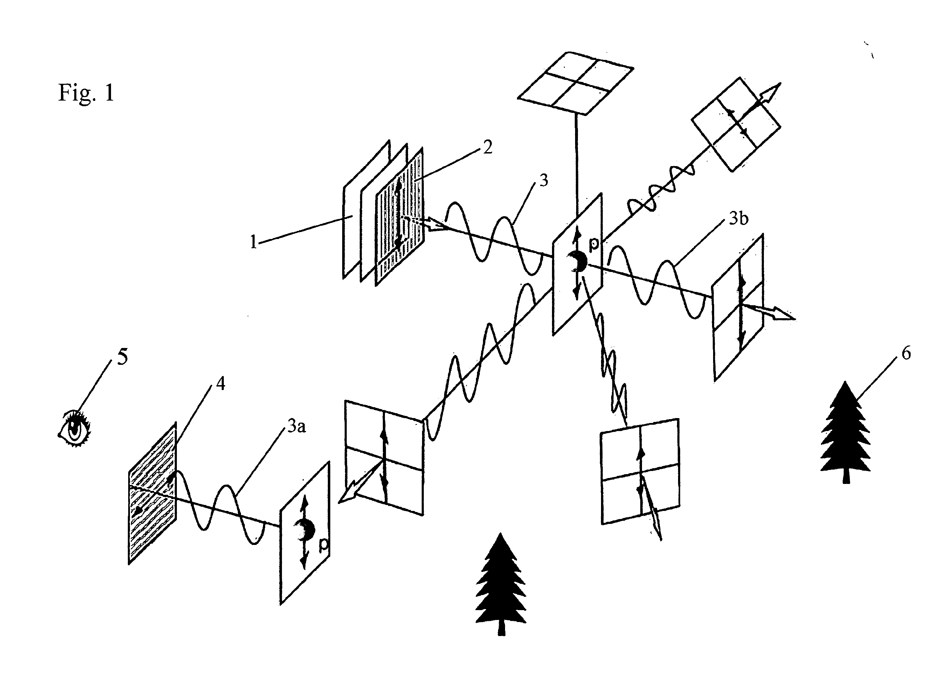

Fig. 1 shows the operation of the device according to the invention. A light source (1) emits light which passes through a first polarised filter (2), such as a filter with vertical polarisation. The polarised beam of light (3) exits from said filter (2) and strikes a multitude of water particles immersed in the air, namely fog or drops of rain which fall, depending on the size of said particles. In fig. 1, said multitude is shown as P.

The effect of the water particles on polarised beam of light (3) is to diffuse it in all directions, changing the polarisation planes. In particular, part of said beam of polarised light (3) is reflected, giving rise to a reflected beam (3a), while another part thereof (3b) continues in the same direction as said beam (3). Said beams of light (3a, 3b) mainly maintain the direction of polarisation of said beam (3) exiting from said first polarised filter (2). Hence when said reflected beam (3a) reaches a second filter (4), polarised in a direction orthogonal to the direction of polarisation of said first polarised filter (2), much of said reflected beam (3a) will be blocked and will not reach observer (5) located behind said second polarised filter (4). As said reflected beam (3a) does not carry any image, having been reflected by particles P, only part of the light liable to dazzle observer (5) will have been eliminated.

Said beam (3b), which continues in the same direction as incident beam (3), will mainly be polarised like incident beam (3), but will also contain other directions of oscillation due to the effect of interaction with particles P. When said beam (3b) reaches an obstacle (6) and, being reflected (3c), again crosses the medium containing particles P in suspension until it reaches said second filter (4), it will have lost much of its polarisation, and can consequently be seen by observer (5).

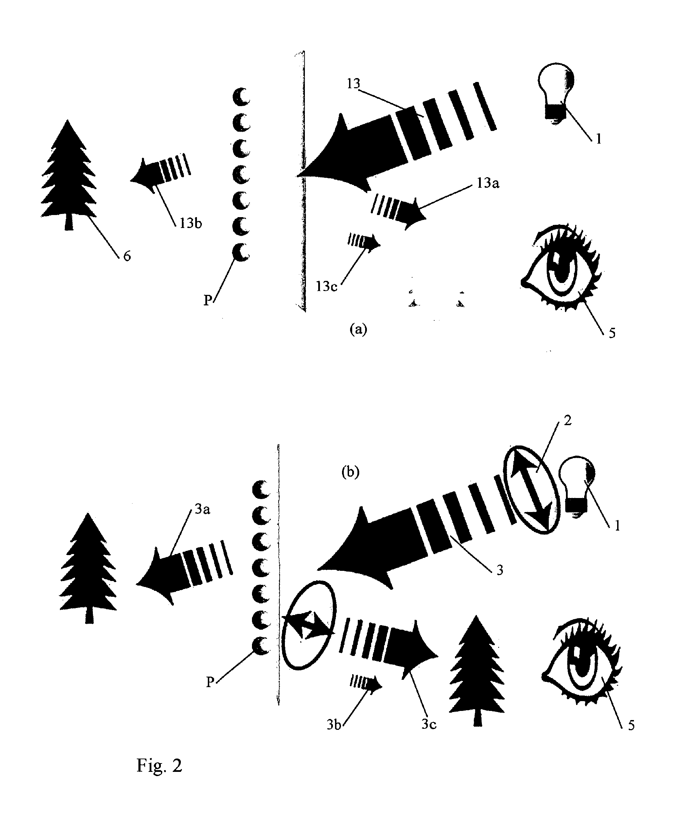

Fig. 2a illustrates the case of vision of an object (6) observed by observer (5), said object (6) being immersed in a fog consisting of particles P and lit by a light source (1) which emits a beam of light (13). The beam of light (13a) reflected by the particles reaches observer (5) intact, because the two orthogonally polarised filters (2) and (4) are not present. Simultaneously the beam of light (13b) which crosses the particles reaches obstacle (6), which reflects it (13c) towards observer (5). Under these circumstances visibility is highly critical, because beam of light (13a) reflected by the particles is particularly intense, and this greatly hinders vision of the beam of light (13c) reflected by the obstacle. In practice, it is like looking at an object placed close to a source of bright light pointing towards the observer.

In the case illustrated in fig. 2b, said two polarised filters (2) and (4) are present. In this case the beam of light (3a) reflected by the fog, being almost entirely polarised by said first polarised filter (2), is almost entirely blocked by said second polarised filter (4) and consequently hinders the view of beam (3b) reflected by object (6) to a much lesser extent.

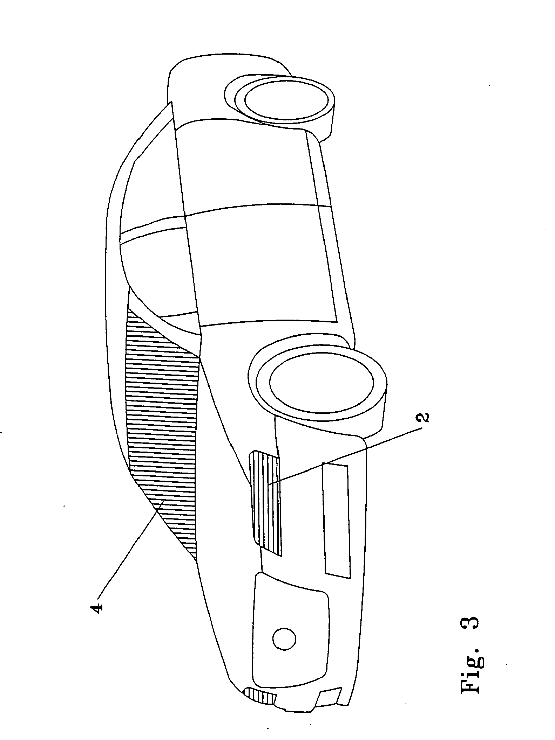

Fig. 3 shows a vehicle equipped with a device according to the invention, namely first polarised filters (2) positioned on the headlamps and a second polarised filter (4) which, according to a preferred embodiment, can extend over the entire surface of the windscreen, said second filter (4) being polarised in a direction orthogonal to the direction of polarisation of said first filters (2).

The fact that said second filter (4) is integral with the vehicle enables it to be oriented accurately in relation to the direction of polarisation of said first filters (2), but said second polarised filter (4) can also be positioned immediately in front of observer (5), in this case the driver of the vehicle, who can wear glasses with polarised lenses.

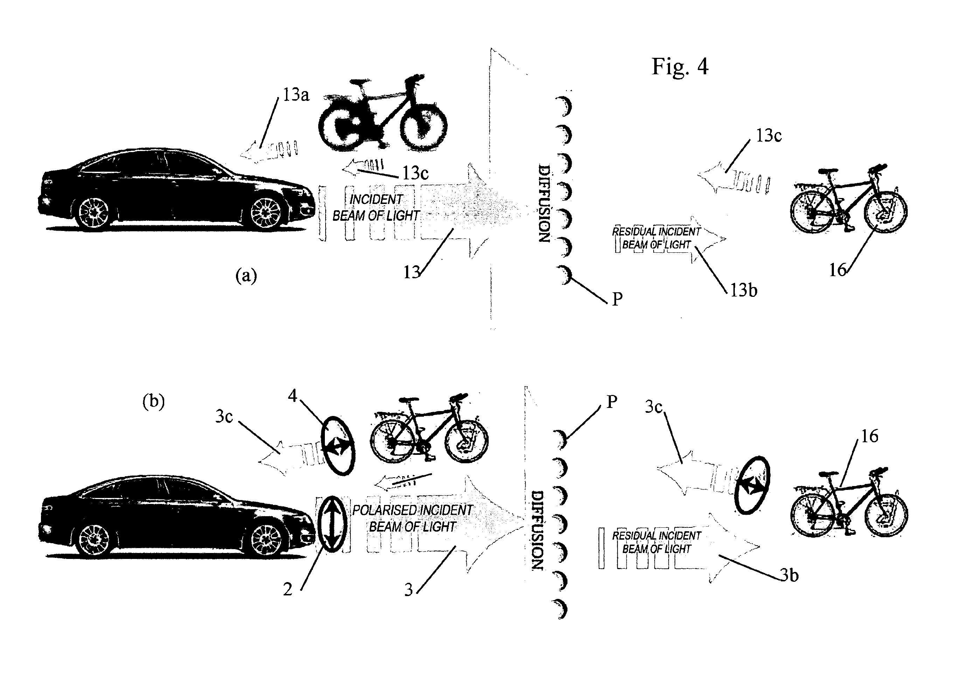

Fig. 4 illustrates a case equivalent to the one illustrated in fig. 2, involving viewing an object (16) immersed in fog, such as a bicycle, as may occur while driving. Here again, visibility is obviously improved if a pair of polarised filters (2) and (4), suitably oriented (fig. 4b), are used, because the contrast between beam (3c) reflected by object (16) is far more intense than the beam (3a) reflected by the fog as it reaches the driver of the vehicle, as it has been almost completely blocked by filter (4). Fig. 4a shows the case of absence of filters, so that beam (13a), reflected by the fog, reaches the driver intact, considerably hindering his view of object (16).

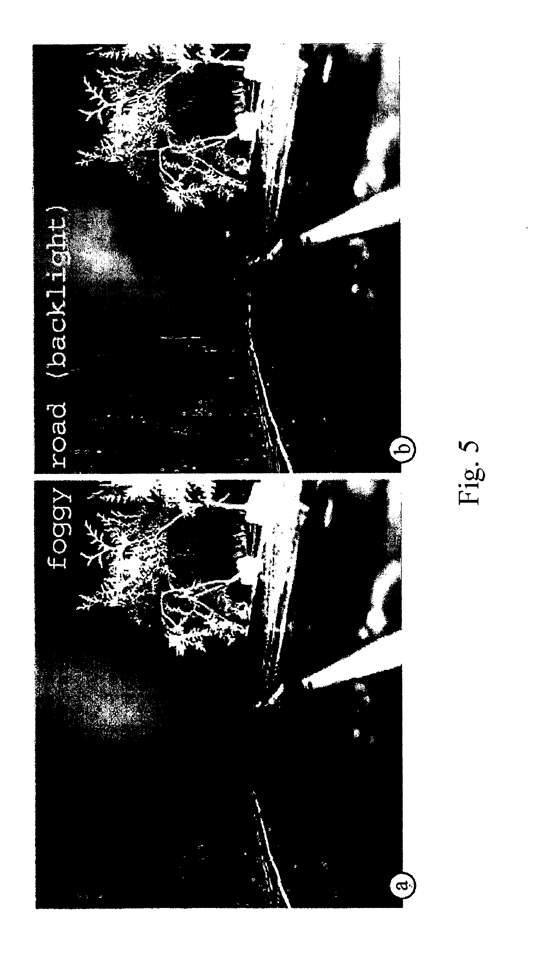

Fig. 5 shows, by means of photographic images taken in foggy conditions with and without the device according to the invention, exactly what the driver can see in the case of a backlit scene.

**Claims**

1. Method for improving the visibility by an observer (5) of an object (6) immersed in a medium containing particles P in suspension, said object being illuminated mainly by a light source (1), **characterised in that** a first beam of light (3), produced by said source (1) and projected towards said object to be observed (6), is passed through a first polarising filter (2) in such a way that a first beam of light (3a), reflected by said particles in suspension P, reaches said observer (5) after passing through a second polarised filter (4), and remaining substantially blocked, said second filter (4) being polarised in a direction orthogonal to the direction of polarisation of said first polarised filter (2), consequently allowing a second beam of light (3c), reflected by the object to be observed (6), to reach said observer (5) substantially without the interference caused by said first reflected beam (3a).

2. Device designed to improve visibility by an observer (5) of an object (6) immersed in a medium containing particles P in suspension, said object being lit mainly by a light source (1), **characterised in that** it includes:

   • at least one first polarised filter (2), positioned in front of said light source (1) and on the trajectory of a light beam (3), emitted by said light source (1) and directed towards said object to be observed (6),

   • at least one second polarised filter (4), positioned in front of said observer (5) and on the trajectory of a beam of light (3a) reflected by said particles P in suspension and directed towards said observer (5),

   • said first and second polarised filters (2, 4) being oriented in such a way that the direction of polarisation of said first polarised filters (2) is orthogonal to the direction of polarisation of said second polarised filters (4).

3. Device as claimed in claim 2, **characterised in that** said first polarised filters (2) are fitted to one or more headlamps of a means of transport.

4. Device as claimed in claim 2, **characterised in that** said second polarised filters (4) are fitted in such a way as to be integral with said means of transport.

5. Device as claimed in claim 4, **characterised in that** said second polarised filters (4) are applied to the windscreen of said means of transport.

6. Device as claimed in claim 3 or 4, **characterised in that** said means of transport is a motor vehicle.

7. Device as claimed in claim 3 or 4, **characterised in that** said means of transport is a boat.

8. Device as claimed in claim 3 or 4, **characterised in that** said means of transport is an aircraft.

9. Device designed to improve visibility by an observer of an object immersed in a medium containing particles in suspension, as described and illustrated.

EP 1 715 243 A1

Fig. 1

(a)

(b)

Fig. 2

Fig. 3

Fig. 4

EP 1 715 243 A1

Fig. 5

European Patent
Office

**EUROPEAN SEARCH REPORT**

Application Number

EP 06 00 7032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 43 30 708 A1 (NABWANI, YOSIF, 57074 SIEGEN, DE) 16 March 1995 (1995-03-16) * column 4, lines 7-21; claim 6 * ----- | 1-9 | INV. F21S8/10 B60J3/06 B60R21/00 |
| X | GB 2 278 816 A (NICHOLAS ANDREW * GRANT; RODERICK PARRY * THOMPSON) 14 December 1994 (1994-12-14) * page 1; figure 1 * ----- | 1-6,9 | |
| X | US 3 840 731 A (SAUFFERER H,DT) 8 October 1974 (1974-10-08) * column 1, lines 5-36; figures 1-3 * ----- | 1-4,6,9 | |
| A | FR 2 846 756 A (LE PECHON STEPHANE JEAN MARTIN) 7 May 2004 (2004-05-07) * abstract; claims 1,2 * ----- | 1-9 | |
| A | US 2 562 895 A (DREYER JOHN F) 7 August 1951 (1951-08-07) * the whole document * ----- | 1-9 | |
| | | | TECHNICAL FIELDS SEARCHED (IPC) F21S B60J B60R B60Q |

The present search report has been drawn up for all claims

| Place of search | Date of completion of the search | Examiner |
|---|---|---|
| Berlin | 7 July 2006 | Petersson, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 00 7032

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2006

| Patent document cited in search report | | Publication date | Patent family member(s) | | Publication date |
|---|---|---|---|---|---|
| DE 4330708 | A1 | 16-03-1995 | NONE | | |
| GB 2278816 | A | 14-12-1994 | NONE | | |
| US 3840731 | A | 08-10-1974 | DE 2035741 A1<br>FR 2101807 A5<br>GB 1319170 A | | 20-01-1972<br>31-03-1972<br>06-06-1973 |
| FR 2846756 | A | 07-05-2004 | NONE | | |
| US 2562895 | A | 07-08-1951 | NONE | | |

EPO FORM P0459

For more details about this annex : see Official Journal of the European Patent Office, No. 12/82